# DEMANDE DE BREVET EUROPEEN

(11) **EP 3 866 178 A1**
(43) Date de publication de la demande: **18.08.2021**
(21) Numéro de dépôt: 20216931.4
(22) Date de dépôt: 23.12.2020
(51) Int. Cl.: H01B 7/36, H01B 13/34, B65G 57/22

(54) **AIDE AU REPERAGE DE CONDUCTEURS ELECTRIQUES**

(30) Priorité: 17.02.2020 FR 2001542
(71) Demandeur: Nexans, 92400 Courbevoie (FR)
(72) Inventeur: BENICHOU, Fabrice, 69009 LYON (FR)
(74) Mandataire: Ipsilon

(57) **Abrégé**

L'invention concerne un procédé de fabrication de N de couronnes formées chacune d'un enroulement d'une portion longitudinale de longueur L_{cour} d'un même conducteur électrique d'origine comprenant une gaine extérieure isolante (3). Le procédé comporte les étapes consistant à :- imprimer directement sur la gaine (3), des séries consécutives de symboles d'aide au repérage le long dudit conducteur électrique d'origine, chaque série s'étendant sur au moins une portion longitudinale de longueur L_{cour}, et comportant une succession d'un même symbole sélectionné parmi M modèles distincts (M₁, M₂, ...M₁₄); - former successivement lesdites couronnes en enroulant et coupant, pour chaque couronne, le conducteur électrique d'origine sur une portion longitudinale de longueur L_{cour} portant une série d'un même symbole, ledit même symbole étant changé pour chaque série de manière à ce que chacun des M modèles distincts (M₁, M₂, ...M₁₄) se retrouve au moins une fois dans les N couronnes formées.

## Description

### Domaine technique

La présente invention concerne de manière générale le domaine des conducteurs électriques destinés à l'équipement des installations domestiques ou du tertiaire.

### Arrière-plan technologique

Les conducteurs ou fils électriques isolés utilisés dans les installations domestiques ou du tertiaire sont classiquement composés d'une âme conductrice, généralement en cuivre, entourée d'une enveloppe ou gaine extérieure isolante. On connaît notamment les conducteurs électriques harmonisés de type H07V-U, composés d'une âme massive en cuivre et d'une gaine extérieure isolante en PVC, ou encore de type H07-VK pour lesquels l'âme est composée de multibrins de cuivre, ce qui confère plus de souplesse aux conducteurs.

Lors d'une installation électrique dans une habitation ou des bureaux, l'installateur peut être amené à utiliser un nombre important de ces conducteurs électriques afin de réaliser une pluralité de circuits électriques permettant de relier différents équipements (tels que des prises, des appareils électriques de chauffage, des dispositifs d'éclairage, des appareils de cuisson...) au tableau électrique général de l'habitation. Différentes sections de ces conducteurs électriques rigides ou souples sont généralement disponibles pour couvrir différents usages. Par exemple, une section de 1,5 mm² est utilisée pour réaliser un circuit d'éclairage, une section de 2,5 mm² est utilisée pour connecter une prise de courant classique, et des sections de 4 à 6mm² peuvent être utilisées pour la connexion des appareils électriques. Pour pouvoir identifier chaque circuit électrique lors de son raccordement au tableau électrique, l'installateur doit pouvoir repérer aisément chacun des conducteurs électriques qui ont été tirés dans les gaines d'installation, ou à tout le moins, chaque circuit électrique regroupant plusieurs de ces conducteurs électriques (généralement trois conducteurs utilisés respectivement comme phase, neutre et terre d'un circuit électrique).

Pour faciliter le repérage, les normes imposent déjà d'utiliser des couleurs différentes pour réaliser les gaines extérieures isolantes des conducteurs. A titre d'exemple non limitatif, la norme européenne impose une gaine isolante :
- de couleur bleue lorsque le fil électrique isolé est utilisé comme fil de neutre ;
- de couleur vert/jaune lorsque le fil électrique isolé est utilisé comme fil de terre ;
- de couleur marron ou de couleur rouge lorsque le fil électrique isolé est utilisé comme phase. Dans ce dernier cas, d'autres couleurs peuvent néanmoins être utilisées (par exemple violet/gris/ivoire/noir...).

Le nombre de couleurs dont dispose un installateur est souvent insuffisant pour lui permettre d'identifier les différents circuits.

En effet, les conducteurs électriques, qu'ils soient à âme rigide ou à âme souple, sont traditionnellement commercialisés sous la forme de couronnes composées chacune généralement d'un enroulement de 100 mètres de fil électrique isolé d'une couleur de gaine extérieure donnée et de section de conducteur donnée. Chaque couronne est commercialisée sous une référence du fabricant du conducteur dépendant de la section de conducteur et de la couleur de la gaine extérieure isolante. Il est rare qu'un installateur dispose, au moment de l'installation, d'un nombre suffisant de couronnes de conducteurs de différentes couleurs et de différentes sections. De plus, même s'il dispose de toute la gamme de couleurs disponibles sur le marché pour chaque section possible de conducteurs électriques, cela peut rester insuffisant dans le cas de certaines installations domestiques complexes pour lesquelles le nombre de circuits électriques à installer est élevé. En conséquence, pour pouvoir identifier plus facilement les fils électriques qui sont tirés dans les gaines avant leur raccordement au tableau électrique, l'installateur positionne classiquement un repère manuellement, généralement sous forme d'un ruban adhésif ou d'une bague de repérage, autour des conducteurs de chaque circuit électrique, voire autour de chaque conducteur électrique. Outre le fait que cela rend les opérations d'installation proprement dite plus complexes et plus longues, les bagues et rubans adhésifs peuvent disparaître alors que les opérations d'installations ne sont pas terminées, notamment du fait de l'intervention d'autres corps de métier sur un chantier d'habitation, ou même après l'installation, rendant dans ce cas les opérations de maintenance plus fastidieuses.

Il existe un besoin pour les techniciens de disposer d'une solution d'aide au repérage qui soit simple et durable pour faciliter les opérations d'installation et/ou de maintenance de circuits électriques utilisant des conducteurs électriques isolés.

En outre, il est souhaitable que cette solution soit intégrée au niveau des conducteurs électriques, sans pour autant venir multiplier les références produits (en particulier les références de fabricants) sous lesquelles les conducteurs électriques sont commercialisés.

### Résumé de l'invention

La présente invention a pour objet un procédé de fabrication d'un nombre N de couronnes formées chacune d'un enroulement d'une portion longitudinale de longueur Lcour d'un même conducteur électrique d'origine comprenant une gaine extérieure isolante, ledit procédé comportant les étapes consistant à :
- imprimer directement sur la gaine extérieure isolante des séries consécutives de symboles d'aide au repérage le long dudit conducteur électrique d'origine, chaque série s'étendant sur au moins une portion longitudinale de longueur Lcour dudit conducteur électrique d'origine, et chaque série comportant une succession d'un même symbole d'aide au repérage sélectionné dans un ensemble prédéfini de M modèles distincts de symboles d'aide au repérage;
- former successivement lesdites couronnes en enroulant et coupant, pour chaque couronne, ledit conducteur électrique d'origine sur une portion longitudinale de longueur Lcour portant une série d'un même symbole d'aide au repérage, ledit même symbole d'aide au repérage étant changé pour chaque série de manière à ce que chacun des M modèles distincts se retrouve au moins une fois dans les N couronnes formées.

On garantit ainsi de produire, à partir d'un même conducteur électrique de référence donnée (couleur de gaine et section), un ensemble de couronnes de conducteurs électriques intégrant des marques distinctives d'aide au repérage, ce qui évite de multiplier les références de commercialisation.

Dans une mise en œuvre possible, l'impression des symboles d'aide au repérage s'effectue au fur et à mesure que les couronnes sont formées.

Dans une mise en œuvre possible, chaque série s'étend sur une seule portion longitudinale de longueur Lcour dudit conducteur électrique d'origine.

En variante, chaque série s'étend sur un nombre entier de portions longitudinales successives de longueur L_{cour} dudit conducteur électrique d'origine.

Dans une mise en œuvre possible, le procédé comporte en outre une étape de conditionnement des N couronnes formées en un nombre P de piles adjacentes positionnées sur une palette de conditionnement et constituées chacune par un empilage de couronnes, les N couronnes étant automatiquement réparties, au fur et à mesure de leur formation, dans les P piles selon un séquencement des piles prédéterminé en fonction de l'ordre dans lequel les couronnes ont été formées et/ou d'un ordre d'apparition de chaque symbole d'aide au repérage dans les couronnes formées successivement, de sorte qu'une même pile et/ou des piles adjacentes comportent des couronnes dont les symboles d'aide au repérage sont distincts.

Dans une mise en œuvre possible, les P piles sont formées par niveau, chaque couronne d'une série de P couronnes successivement formées étant répartie en suivant un chemin de répartition prédéterminé par rapport à la palette.

Dans une mise en œuvre possible, chaque série s'étend sur une seule portion longitudinale de longueur L_{cour} dudit conducteur électrique d'origine, et le nombre M de modèles distincts de symboles d'aide au repérage est au plus égal au nombre P de piles.

Dans une mise en œuvre possible, M est égal à P -1.

Dans une mise en œuvre possible, 225 couronnes sont formées et conditionnées sur la palette de conditionnement en 15 piles de 15 couronnes.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
La figure 1 illustre schématiquement un tronçon d'un conducteur électrique isolé à partir duquel des couronnes vont pouvoir être formées conformément à l'invention ;
La figure 2 illustre schématiquement le principe d'une étape de formation de couronnes à partir d'un même conducteur électrique isolé, suivie d'une étape facultative de conditionnement des couronnes formées dans une mise en œuvre possible d'un procédé conforme à la présente invention ;
La figure 3 illustre schématiquement deux vues (a) et (b) d'un exemple de palette de conditionnement des couronnes en piles, représentant respectivement la palette de conditionnement portant un premier niveau de couronnes pour chaque pile, et la même palette de conditionnement à l'issue de l'étape de conditionnement ;
La figure 4 donne un exemple de correspondances entre les piles, couronnes et modèle de symboles et d'aide au repérage obtenu selon une implémentation possible de l'invention ;
La figure 5 représente schématiquement des portions d'un exemple de conducteur électrique avant formation des couronnes, selon un mode d'implémentation possible de l'invention.

### Description de mode(s) de réalisation

Dans les figures, et à moins qu'il n'en soit disposé autrement, les éléments identiques ou équivalents porteront les mêmes signes de référence.

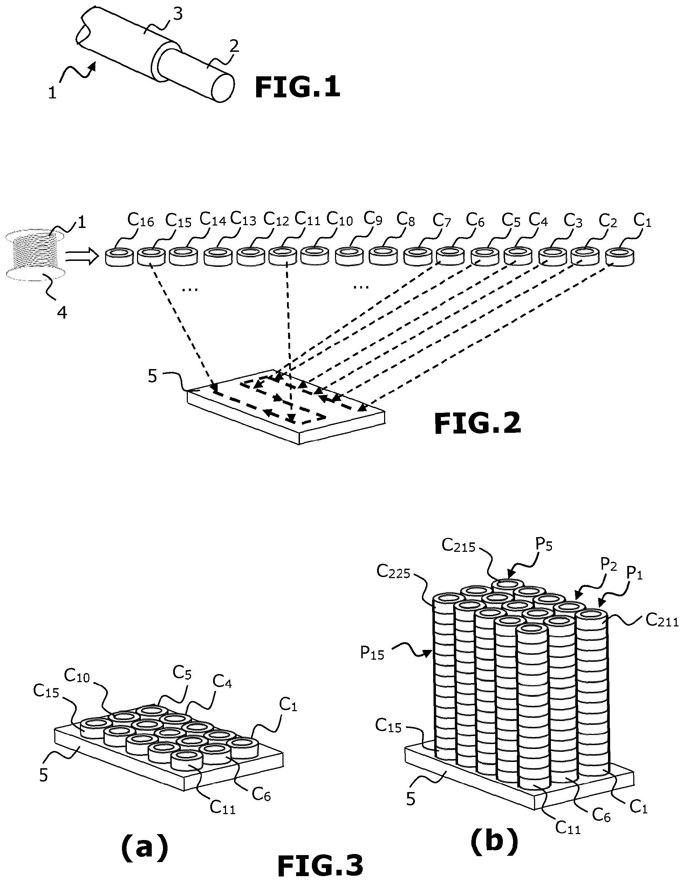

Conformément à l'invention, N couronnes sont formées à partir d'un même conducteur électrique d'origine, tel que le conducteur électrique 1 dont un tronçon est représenté sur la figure 1, comportant une âme métallique 2, rigide ou souple, entourée d'une gaine extérieure isolante 3 de couleur donnée. On suppose dans la suite, à titre d'exemple non limitatif, que le conducteur électrique 1 dont on dispose présente une longueur Lcond suffisante pour pouvoir réaliser un nombre N égal à 225 de couronnes (notées dans la suite C₁ à C₂₂₅), par enroulement et coupe de portions longitudinales successives de longueur Lcour égale à 100 mètres du conducteur électrique 1.

Conformément à l'invention, on prévoit, préalablement à la formation proprement dite des couronnes, en l'occurrence de l'enroulement d'une portion longitudinale de longueur L_{cour}, d'imprimer des symboles d'aide au repérage directement sur la gaine extérieure 3 du conducteur électrique.

Dans un premier mode de réalisation qui va à présent être décrit en référence aux figures 2 à 4, l'impression des symboles d'aide au repérage s'effectue au fur et à mesure que les couronnes sont formées, ce qui présente l'avantage de pouvoir réaliser les couronnes sur commande, à partir d'un même conducteur électrique d'origine fabriqué au préalable selon les techniques habituelles.

Plus précisément, on suppose ici que le conducteur électrique 1 d'origine à partir duquel les 225 couronnes vont être formées a été fabriqué antérieurement, avec une couleur de gaine et une section données, puis conditionné à des fins de stockage par enroulement d'une longueur Lcond sur un touret 4 (figure 2). Pour la formation de différentes couronnes à partir de ce conducteur 1, on utilise classiquement une machine spécifique (non représentée) d'une ligne automatique de conditionnement configurée pour tirer en continu sur une extrémité libre du conducteur électrique 1 de manière à dérouler successivement des portions longitudinales de longueur Lcour depuis le touret 4, et enrouler et couper au fur et à mesure chaque portion longitudinale de longueur Lcour pour former successivement chaque couronne. La figure 2 illustre les 16 premières couronnes C₁ à C₁₆ formées successivement à partir du conducteur 1.

Conformément au premier mode de réalisation selon l'invention, on interpose, entre le touret 4 et la machine spécifique, un dispositif fixe d'impression (non représenté) apte à imprimer des séries consécutives de symboles d'aide au repérage alors que les portions de conducteurs se déplacent relativement au dispositif d'impression, guidées de préférence entre deux poulies lors du processus de formation des couronnes.

Dans un mode de réalisation possible, on utilise un dispositif d'impression à jet d'encre.

Plus précisément, le dispositif d'impression est commandé pour imprimer, directement sur la gaine extérieure isolante 3 du conducteur électrique 1, des séries consécutives de symboles d'aide au repérage au fur et à mesure que le conducteur électrique 1 est déroulé du touret 4.

Conformément à l'invention, chaque série :
- s'étend sur au moins une portion longitudinale de longueur L_{cour} du conducteur électrique 1 d'origine, et
- comporte une succession d'un même symbole d'aide au repérage sélectionné dans un ensemble prédéfini de M modèles distincts de symboles d'aide au repérage.

Les couronnes sont alors formées successivement en enroulant et coupant, pour chaque couronne, le conducteur électrique 1 d'origine sur une portion longitudinale de longueur L_{cour} portant une série d'un même symbole d'aide au repérage. En outre, le symbole d'aide au repérage imprimé sur la gaine extérieure 3 est changé pour chaque série de manière à ce que chacun des M modèles distincts se retrouve au moins une fois dans les N couronnes formées.

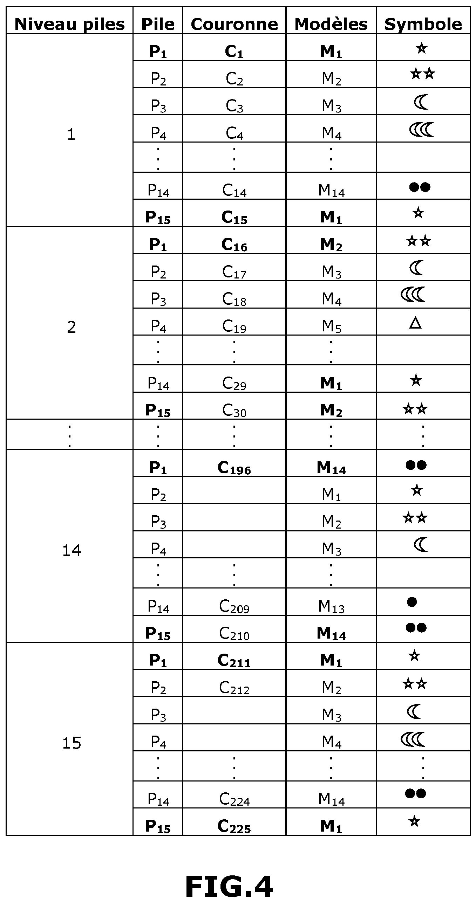

A titre d'exemple non limitatif, la figure 4 donne, dans les trois dernières colonnes du tableau, des exemples de symboles d'aide au repérage sélectionnés dans un ensemble de 14 modèles distincts M₁ à M₁₄, ainsi qu'un exemple de séquencement montrant que le symbole d'aide au repérage est ici changé pour chaque couronne formée, et sélectionné pour balayer cycliquement l'ensemble des modèles. En d'autres termes, dans cet exemple non limitatif, chaque série comprenant une succession d'un même symbole (par exemple une succession du symbole représentant une étoile pour le modèle M₁ ou une succession du symbole représentant deux étoiles pour le modèle M₂) s'étend sur une seule portion longitudinale de longueur Lcour de sorte que deux couronnes successivement formées portent des symboles d'aide au repérage différents. Ainsi, la portion de conducteur enroulée sur la première couronne C₁ obtenue selon le procédé de l'invention portera une série du symbole représentant une étoile (modèle M₁), de préférence régulièrement espacé le long du conducteur, par exemple tous les 10 cm, alors que la couronne C₂ obtenue immédiatement après portera une série du symbole représentant deux étoiles (modèle M₂), et ainsi de suite de manière à répéter cycliquement les 14 modèles distincts M₁ à M₁₄.

En variante, on peut prévoir que chaque série s'étende sur un nombre entier k de portions longitudinales successives de longueur Lcour du conducteur électrique 1 d'origine, ce qui revient à dire que le symbole de repérage imprimé le long de la gaine n'est changé que toutes les k couronnes successivement formées, le nombre entier k pouvant en outre être variable à chaque changement de symbole.

De retour sur la figure 2, dans un mode de réalisation possible, le procédé de fabrication selon l'invention comporte de préférence une étape de conditionnement des N couronnes formées en un nombre P de piles adjacentes positionnées sur une palette 5 de conditionnement et constituées chacune par un empilage de couronnes, les N couronnes étant automatiquement réparties, au fur et à mesure de leur formation, dans les P piles selon un séquencement des piles prédéterminé en fonction de l'ordre dans lequel les couronnes ont été formées et/ou d'un ordre d'apparition de chaque symbole d'aide au repérage dans les couronnes formées successivement, de sorte qu'une même pile et/ou des piles adjacentes comportent des couronnes dont les symboles d'aide au repérage sont distincts.

On augmente ainsi la probabilité qu'un installateur qui commande un nombre limité de couronnes d'au moins une référence donnée (correspondant à une couleur de gaine et une section de conducteur) soit livré avec des couronnes portant des symboles d'aide au repérage différents.

A titre d'exemple non limitatif, une même palette de conditionnement 4 peut recevoir les 225 couronnes C₁ à C₂₂₅ réparties en 15 piles P₁ à P₁₅, chaque pile comportant en conséquence un empilage de 15 couronnes, comme représenté sur la vue (b) de la figure 3. A titre d'exemple non limitatif, la palette de conditionnement peut être un socle rectangulaire de 120 cm sur 80 cm, et les 15 piles de couronnes peuvent être réparties en trois rangées de 5 piles chacune, chaque rangée s'étendant sur la plus grande longueur de la palette.

Les piles P₁ à P₁₅ sont de préférence formées par niveau. Pour ce faire, chaque couronne d'une série de P couronnes successivement formées, telles que les 15 premières couronnes C₁ à C₁₅ de la figure 2 est répartie sur la palette 5 en suivant un chemin de répartition prédéterminé par rapport à la palette, tel que le chemin de répartition horizontal représenté en trait interrompu sur la figure 2, à titre d'exemple non limitatif. En pratique, les couronnes formées successivement par la machine spécifique sont de préférence stockées dans une file de stockage (non représentée) de la ligne de conditionnement. Dès que cinq couronnes ont été fabriquées, un bras automatique de la ligne de conditionnement peut être avantageusement prévu pour récupérer ces cinq couronnes en une seule fois, et les déposer sur la palette directement sur cinq piles d'une même rangée.

La vue (a) de la figure 3 représente une étape intermédiaire du conditionnement des couronnes C₁ à C₁₅ sur la palette 5 à l'issue de laquelle seul le premier niveau de chacune des 15 piles a été rempli. Le schéma de répartition est réitéré pour les 15 couronnes suivantes (C₁₆ à C₃₀) pour former le deuxième niveau, et ainsi de suite jusqu'à l'obtention des 15 niveaux (vue (b) de la figure 3).

Le tableau de la figure 4 donne les correspondances obtenues entre les piles, niveaux de piles, couronnes et modèles de symboles d'aide au repérage dans l'exemple non limitatif de 225 couronnes formées et réparties en 15 piles, en changeant le symbole pour chaque couronne formée, le symbole étant choisi cycliquement dans 14 modèles.

Ce principe de répartition des couronnes niveau par niveau peut être généralisé à tout procédé de formation de N couronnes conditionnées en P piles, dans lequel on choisit un nombre de modèles M égal à P-1, et on change le symbole d'aide au repérage pour chaque couronne formée. On garantit dans ce cas :
- que deux couronnes adjacentes d'une même pile ne portent pas le même symbole d'aide au repérage ; et
- que deux couronnes situées sur un même niveau de deux piles adjacentes ne portent pas le même symbole d'aide au repérage.

On optimise ainsi les chances qu'un installateur qui commande un nombre limité de couronnes d'au moins une référence donnée (correspondant à une couleur de gaine et une section de conducteur) soit livré avec des couronnes portant des symboles d'aide au repérage différents puisque les couronnes seront extraites de la palette de conditionnement depuis une ou plusieurs adjacentes.

Bien entendu, d'autres schémas de répartition peuvent être envisagés sans départir du cadre de la présente invention.

Dans le mode de réalisation précédemment décrit, on a vu que les séries de symboles d'aide au repérage sont imprimées au fur et à mesure que le conducteur 1 est déroulé du touret 4.

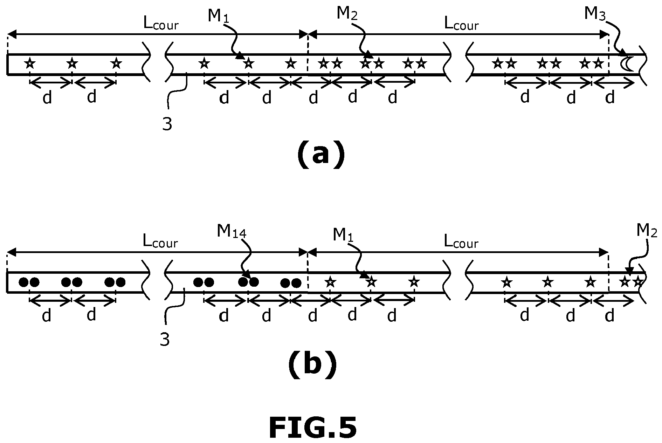

En variante, on peut envisager que le conducteur enroulé sur le touret 4 soit un conducteur sur lequel les séries de symboles d'aide au repérage ont déjà été imprimées, par exemple au moment de la fabrication du conducteur et avant son conditionnement et stockage en touret. A titre d'exemple non limitatif permettant d'obtenir les mêmes correspondances de couronnes, de piles et de modèles que celles indiquées dans le tableau de la figure 4, la vue (a) de la figure 5 illustre deux tronçons successifs de longueur Lcour d'un conducteur sur lequel deux séries de symboles d'aide au repérage, sélectionnés respectivement dans les modèles M₁ et M₂, ont été imprimées, et la vue (b) illustre deux autres tronçons successifs de longueur Lcour de ce même conducteur sur lequel deux autres séries de symboles d'aide au repérage, sélectionnés respectivement dans les modèles M₁₄ et M₁, ont été imprimées. Comme dans le cas précédent, le symbole utilisé pour chaque série est reproduit de façon à être régulièrement espacé d'une distance d, par exemple tous les 10 cm le long du conducteur. Comme dans le cas précédent, chaque couronne est ensuite formée par enroulement et coupe d'une portion de longueur L_{cour}, de façon à obtenir des couronnes dont les symboles d'aide au repérage sont distincts.

## Revendications

1. Procédé de fabrication d'un nombre N de couronnes (C₁-C₂₂₅) formées chacune d'un enroulement d'une portion longitudinale de longueur Lcour d'un même conducteur électrique (1) d'origine comprenant une gaine extérieure isolante (3), ledit procédé comportant les étapes consistant à :
- imprimer directement sur la gaine extérieure isolante (3) des séries consécutives de symboles d'aide au repérage le long dudit conducteur électrique (1) d'origine, chaque série s'étendant sur au moins une portion longitudinale de longueur Lcour dudit conducteur électrique (1) d'origine, et chaque série comportant une succession d'un même symbole d'aide au repérage sélectionné dans un ensemble prédéfini de M modèles distincts (M₁-M₃, ...M₁₄) de symboles d'aide au repérage;
- former successivement lesdites couronnes (C₁-C₂₂₅) en enroulant et coupant, pour chaque couronne, ledit conducteur électrique (1) d'origine sur une portion longitudinale de longueur Lcour portant une série d'un même symbole d'aide au repérage,
ledit même symbole d'aide au repérage étant changé pour chaque série de manière à ce que chacun des M modèles distincts (M₁-M₃, ...M₁₄) se retrouve au moins une fois dans les N couronnes formées.

2. Procédé selon la revendication 1, **caractérisé en ce que** l'impression des symboles d'aide au repérage s'effectue au fur et à mesure que les couronnes sont formées.

3. Procédé selon l'une quelconque des revendications 1 ou 2, **caractérisé en ce que** chaque série s'étend sur une seule portion longitudinale de longueur Lcour dudit conducteur électrique (1) d'origine.

4. Procédé selon l'une quelconque des revendications 1 ou 2, **caractérisé en ce que** chaque série s'étend sur un nombre entier de portions longitudinales successives de longueur Lcour dudit conducteur électrique (1) d'origine.

5. Procédé selon l'une quelconque des revendications 1 ou 2, **caractérisé en ce qu'**il comporte en outre une étape de conditionnement des N couronnes formées (C₁-C₂₂₅) en un nombre P de piles (P₁-P₁₅) adjacentes positionnées sur une palette (5) de conditionnement et constituées chacune par un empilage de couronnes, les N couronnes étant automatiquement réparties, au fur et à mesure de leur formation, dans les P piles (P₁-P₁₅) selon un séquencement des piles prédéterminé en fonction de l'ordre dans lequel les couronnes ont été formées et/ou d'un ordre d'apparition de chaque symbole d'aide au repérage dans les couronnes formées successivement, de sorte qu'une même pile et/ou des piles adjacentes comportent des couronnes dont les symboles d'aide au repérage sont distincts.

6. Procédé selon la revendication 5, **caractérisé en ce que** les P piles (P₁-P₁₅) sont formées par niveau, chaque couronne d'une série de P couronnes successivement formées étant répartie en suivant un chemin de répartition prédéterminé par rapport à la palette (5).

7. Procédé selon l'une quelconque des revendications 5 à 6, **caractérisé en ce que** chaque série s'étend sur une seule portion longitudinale de longueur Lcour dudit conducteur électrique (1) d'origine, et **en ce que** le nombre M de modèles distincts (M₁-M₃, ...M₁₄) de symboles d'aide au repérage est au plus égal au nombre P de piles (P₁-P₁₅).

8. Procédé selon la revendication 7, **caractérisé en ce que** M est égal à P -1.

9. Procédé selon l'une quelconque des revendications 5 à 8, dans lequel 225 couronnes sont formées et conditionnées sur la palette (5) de conditionnement en 15 piles de 15 couronnes.
